# EUROPEAN PATENT SPECIFICATION

(11) **EP 4 660 022 B1**
(45) Date of publication and mention of the grant of the patent: **16.09.2026**
(21) Application number: 25169182.0
(22) Date of filing: 08.04.2025
(51) Int. Cl.: B60T 3/00, B60P 3/077

(54) **CLOSABLE WHEEL CHOCK FOR INDUSTRIAL AND/OR COMMERCIAL VEHICLES**
FALTBARER UNTERLEGKEIL FÜR INDUSTRIE- UND/ODER NUTZFAHRZEUG
CALE DE ROUE PLIABLE POUR VÉHICULES INDUSTRIELS ET/OU COMMERCIAUX

(30) Priority: 05.06.2024 IT 202400012886
(43) Date of publication of application: 10.12.2025
(73) Proprietor: Lokhen S.r.l., 70022 Altamura, Bari (IT)
(72) Inventor: BARATTINI, Daniele, 70022 Altamura, BARI (IT); BUCCOLIERI, Andrea, 70022 Altamura, BARI (IT); GRECO, Luca Oronzo, 70022 Altamura, BARI (IT)
(74) Representative: Mitola, Marco

(56) References cited:
- EP-B1- 2 958 778
- US-A- 4 715 480
- US-A1- 2021 323 513
- US-A1- 2023 183 048
- US-B1- 10 807 572
- US-B2- 7 299 902
- US-B2- 9 637 094

## Description

### FIELD OF APPLICATION

The present invention relates to a closable wheel chock for vehicles, in particular for industrial and/or commercial vehicles.

### BACKGROUND ART

As known, in the transport field, wedges, i.e., wheel chocks, are frequently used, which are arranged at the wheels of the vehicle and/or trailer, so as to prevent any movement thereof, for example due to the presence of even slightly steep terrain.

Therefore, wheel chocks are components subject to high mechanical stresses because they must withstand heavy loads of several tons and are normally exposed to the action of whether agents.

Indeed, the wedges are not normally kept in the driver's cab of the vehicle, but they are placed on the trailer, in a substantially vertical position, at least partially housed in appropriate structures, referred to as wedge racks, usually fixed to the chassis of the vehicle.

The wedges, provided in pairs on each vehicle, must thus be both light-weight and robust. They must be light-weight because they are handled continuously by drivers and therefore must meet ergonomic criteria.

At the same time, they must be robust because any risk of accidental breakage, even under full load, must be avoided since there would be a risk of unintentional movements of the vehicle and/or related trailer, also arranged along ramps with often non-negligible slopes.

Obviously, the two mentioned needs are antithetical, because it is necessary to limit the resistant sections, the thicknesses, and the connections/walls between the support elements in order to reduce the weight, whereas, conversely, it is necessary to increase them in order to increase the strength. Last but not least, the chocks must be affordable. An example of wheel choke is known from the US 9 637 094 B2.

In order to achieve the aforesaid advantages, various solutions of wedges made of plastic material have been developed in the art, by means of injection molding.

Therefore, cost-effective and sufficiently light-weight solutions are obtained, but often at the expense of mechanical strength and especially durability.

Indeed, even if, on the one hand, the known solutions made of plastic material can meet the type-approval criteria required for these devices, on the other hand, also because of the unfavorable environmental conditions of both work and preservation of the wedges, they rapidly lose their mechanical properties and tend to deteriorate prematurely.

Furthermore, there is an undisputed technical problem related to the overall dimensions of the wedge: the wedge, especially if for use with large-diameter wheels, has non-negligible overall dimensions, and therefore are not housable inside the vehicle cab, but as mentioned they are placed in appropriate external wedge racks, usually in a vertical position.

The external positioning has further disadvantages: on the one hand, the wedge is continually subjected to the action of external whether agents, which accelerate the aging thereof and therefore their replacement, and on the other hand, the wedges are often stolen (because they are easily removable from the chassis of the vehicle to which they are fixed).

Solutions of at least partially folding wedges have been provided in the art to reduce the overall dimensions of the wedges when they are not in use. Such solutions provide for the presence of movable parts that can be at least partially folded on the body of the wedge in order to reduce the overall dimensions in resting condition, flattening the shape thereof as much as possible with respect to the operating wedge configuration.

Such known solutions are not particularly reliable and durable today because, as mentioned, the wheel chock is highly biased in use and the presence of movable parts weakens the mechanical strength thereof unless thickeners and reinforcements are introduced, which would however increase the weight and cost thereof compared to known solutions of the "fixed" or non-closable type.

Such cost and weight increases are not acceptable in the field of commercial vehicle equipment.

### OVERVIEW OF THE INVENTION

Therefore, the need is felt to solve the drawbacks and limitations mentioned with reference to the prior art.

In particular, the need is felt to provide a wheel chock that, on the one hand, is strong, reliable, and durable and, on the other hand, has small dimensions so that it can also be housed in the cab (when not in use), without increasing the cost and weight thereof.

Such a need is met by a wheel chock according to claim 1.

### DESCRIPTION OF THE DRAWINGS

Further features and advantages of the present invention will be more comprehensible from the following description of preferred, non-limiting embodiments thereof, in which:
figure 1 depicts a front perspective view of a wheel chock according to an embodiment of the present invention, in an opening or working configuration;
figure 2 depicts a side view of the wheel chock in figure 1;
figures 3-5 depict bottom perspective views of the wheel chock in figure 1;
figure 6 depicts a front perspective view of the wheel chock in figure 1, in a closed or resting configuration;
figure 7-8 depict side and rear views of the wheel chock in figure 1, in a closed or resting configuration;
figure 9 depicts a front perspective view of a wheel chock according to a further embodiment of the present invention, in an opening or working configuration;
figures 10-11 depict bottom views of the wheel chock in figure 9, in an open or working configuration;
figures 12-13 depict further front perspective views of the wheel chock in figure 9, in an opening or working configuration;
figures 14-15 depict a perspective view and a bottom view of the wheel chock in figure 9, in a closed or resting configuration;
figure 16 depicts a front perspective view of a wheel chock according to a further embodiment of the present invention, in an opening or working configuration;
figures 17-18 depict bottom views of the wheel chock in figure 16, in an open or working configuration;
figures 19-20 depict further front perspective views of the wheel chock in figure 16, in an opening or working configuration;
figures 21-23 depict various views of the wheel chock in figure 16, in a closing or working configuration.

The elements or parts of elements common to the embodiments described below will be indicated by the same reference numerals.

### DETAILED DESCRIPTION

With reference to the aforementioned figures, reference numeral 4 diagrammatically indicates, as a whole, a closable wheel chock or wedge for trucks or similar commercial and/or industrial vehicles, according to the present invention.

The closable wheel chock 4 for vehicles comprises a pair of side wheel chocks/wedges 6,7, each equipped with a stop ramp 8, a support wall 12 and a support base 16 on the ground.

Each stop ramp 8 has a front face 18 shaped to interface with a vehicle wheel, extending from a lower front vertex 20 to an upper rear vertex 24.

For example, the front faces 18 of the stop ramps 8 of the side wheel chocks/wedges 6,7 are flat or even concave, so that they are substantially counter-shaped with respect to an associable circular profile of the supported tire of the vehicle. According to a possible embodiment, the front faces 18 can have further geometries and can also be corrugated, for example, to increase grip with the vehicle tire.

Each support wall 12 extends from said upper rear vertex 24 to a lower rear vertex 28, opposite to the stop ramp 8 with respect to a vertical plane V-V, perpendicular to the support base 16 and passing through said upper rear vertex 24.

Each support base 16 extends from said lower front vertex 20 to said lower rear vertex 28. The support base 16 can be either continuous or discontinuous.

The wheel chock 4 further comprises a connecting structure 32 of said side wheel chocks/wedges 6,7, movable from a closing or resting configuration, in which said side wheel chocks/wedges 6,7 are close to each other and/or at least partially in contact along a transverse direction T-T, to an opening or working configuration, in which said side wheel chocks/wedges 6,7 are spaced apart from each other along said transverse direction T-T.

In particular, the side wheel chocks/wedges 6,7 are translatable parallel to said transverse direction T-T to switch from the opening configuration to the closing configuration and vice versa.

The connecting structure 32 is arranged in an intermediate space 36 delimited by inner side walls 40 of the side wheel chocks/wedges 6,7, mutually facing each other.

Said intermediate space 36 has a variable width as a function of the distance between the inner side walls 40 along the transverse direction T-T.

Said connecting structure 32 comprises at least a first central hinge 44, which connects at least two upper connecting rods 48 hinged to the side wheel chocks/wedges 6,7 from the side of the respective upper rear vertices 24 at upper pins 52, and at least two mutually movable lower rods 56, which connect the side wheel chocks/wedges 6,7 from the side of the respective lower front vertices 20.

According to an embodiment, the upper connecting rods 48 and/or the lower rods 56 are load-bearing and configured to receive a load from the associable vehicle wheel, at an upper edge 58 thereof, and to transmit it to the ground by means of a support wall 60 parallel to and aligned with the support base 16 of the side wheel chocks/wedges 6,7.

In other words, the upper connecting rods 48 and/or the lower rods 56 have an upper edge 58 aligned and shaped like the front face 18 of the stop ramps 8 of the side wheel chocks/wedges 6,7 so as to support, in conjunction therewith, the load transmitted by the wheel of the associable vehicle.

Preferably, said first central hinge 44 is raised with respect to the support base 16 of the side wheel chocks/wedges 6,7 so as not to discharge any loads onto the ground. In other words, the first central hinge 44 only acts as a rotary joint for connecting the side wheel chocks/wedges 6,7 and not as a strut for transmitting the load coming from the wheel.

Preferably, said upper pins 52 are not raised with respect to the support base 16 of the side wheel chocks/wedges 6,7 so as to discharge part of the load onto the ground. In other words, the upper pins 52 act both as rotating joints for connecting the side wheel chocks/wedges 6,7 and as struts for transmitting the load coming from the wheel.

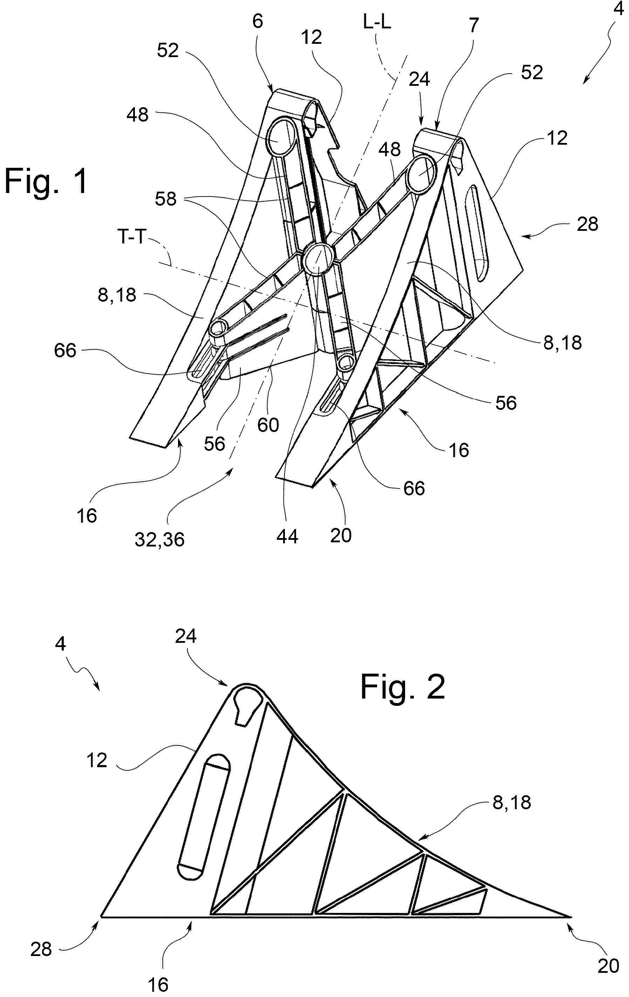

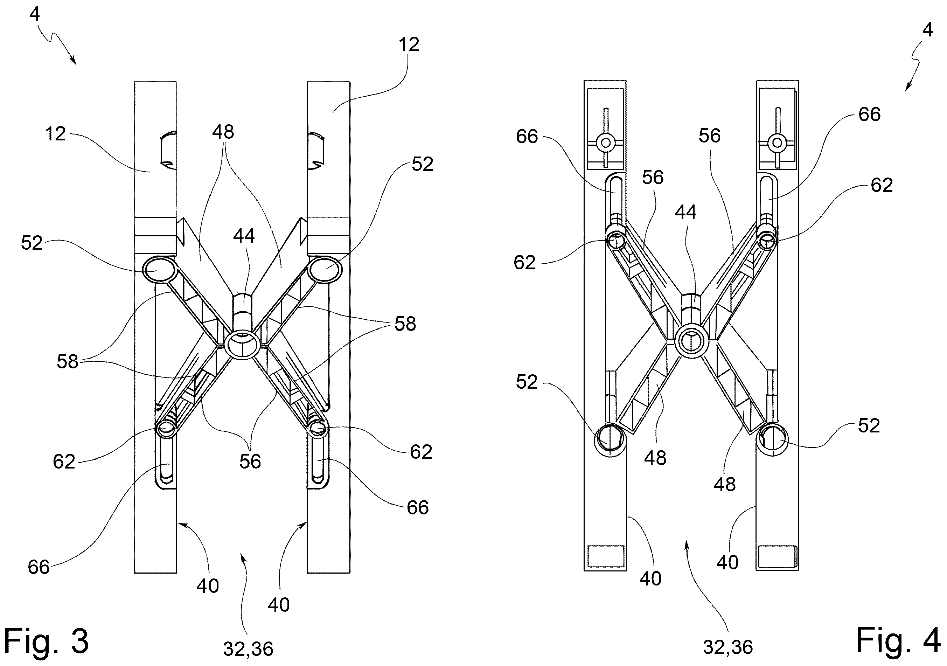

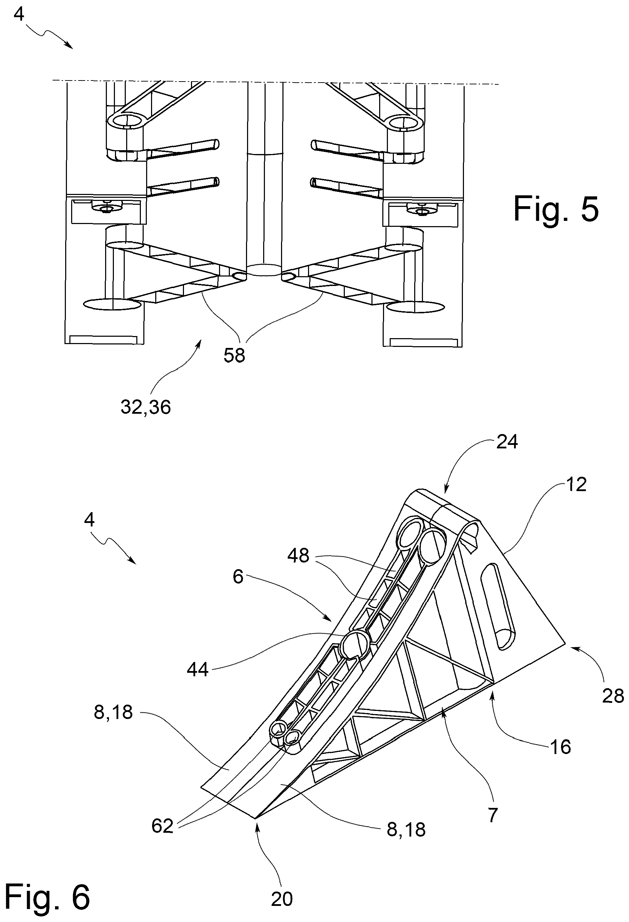

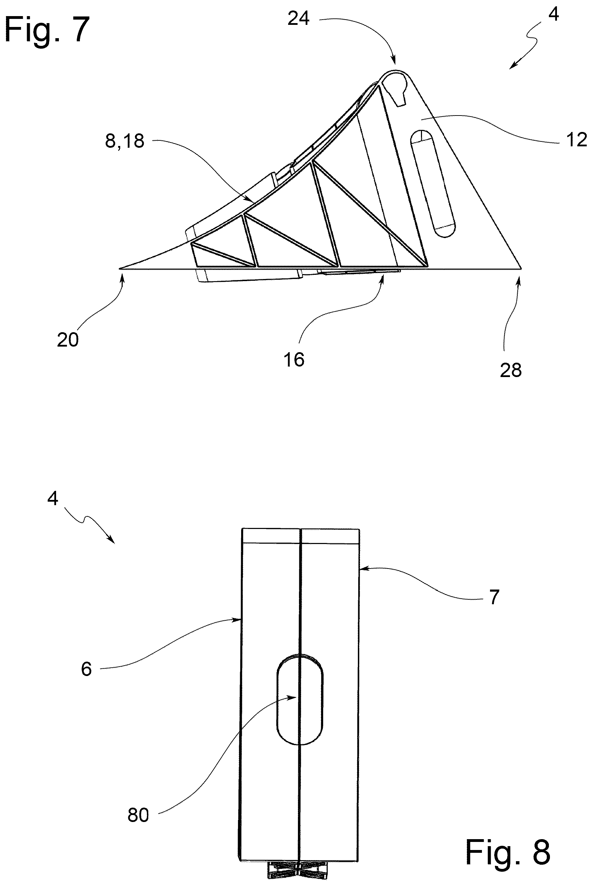

According to a possible embodiment (figures 1-8), said lower rods 56 are hinged to said first central hinge 44 and to said side wheel chocks/wedges 6,7 from the side of the respective lower front vertices 20, at lower pins 62.

According to a possible embodiment, said lower pins 62 are housed inside slots 66. The slots 66 are preferably directed along a longitudinal direction L-L, perpendicular to the transverse direction T-T, so as to allow a translation movement between the lower pins 62 and the side wheel chocks/wedges 6,7, substantially parallel to the side wheel chocks/wedges 6,7 themselves.

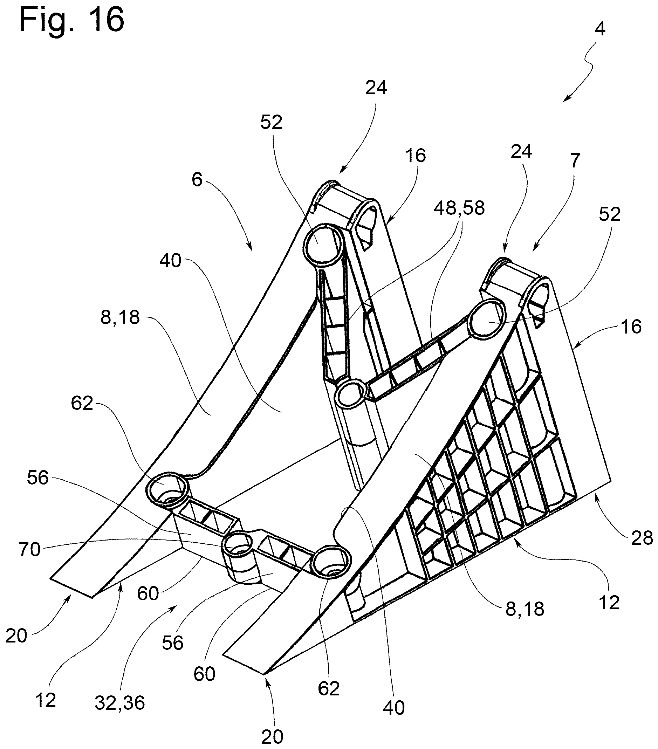

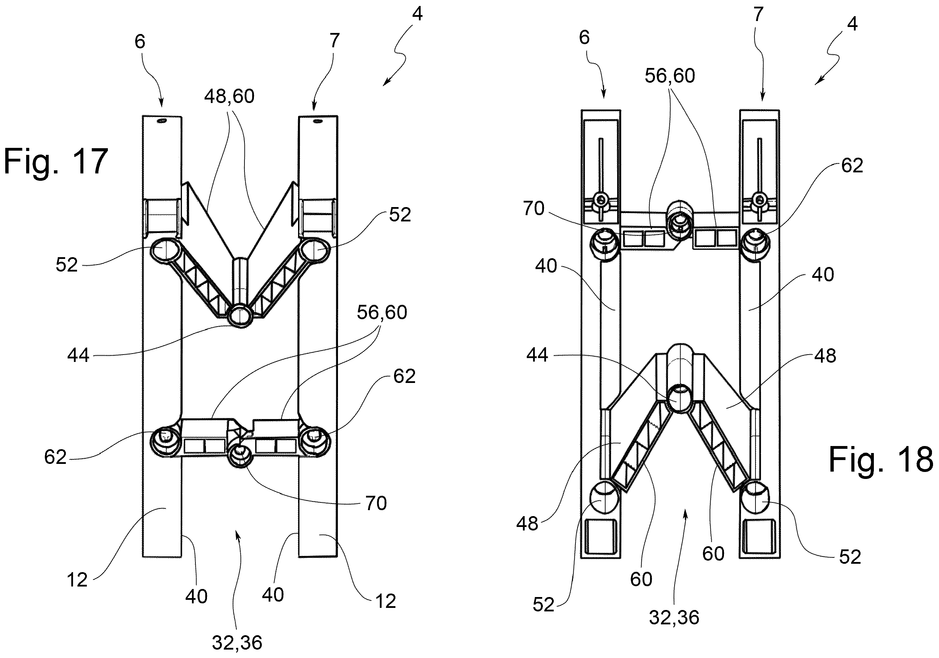

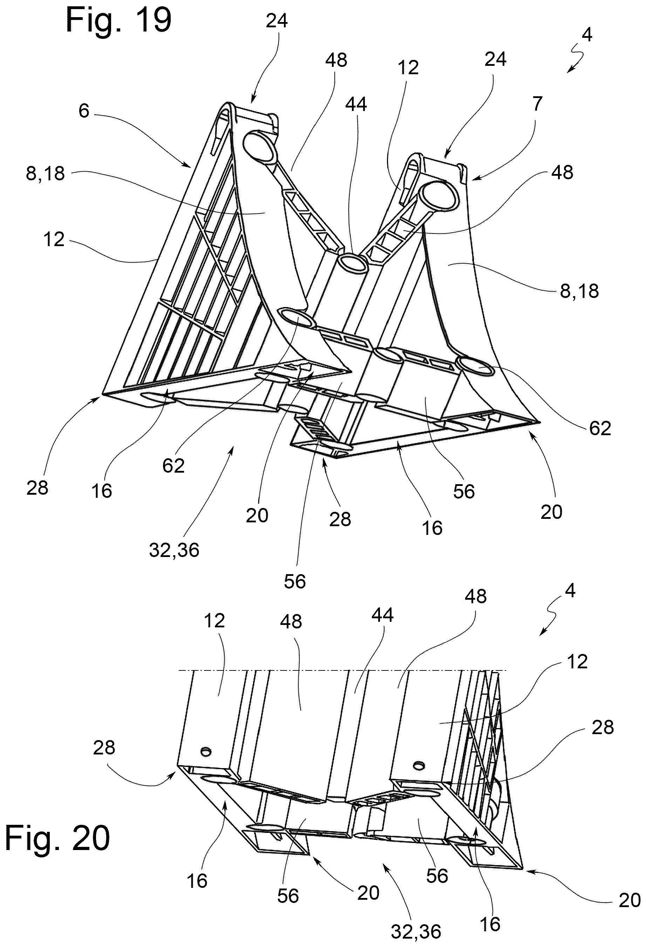

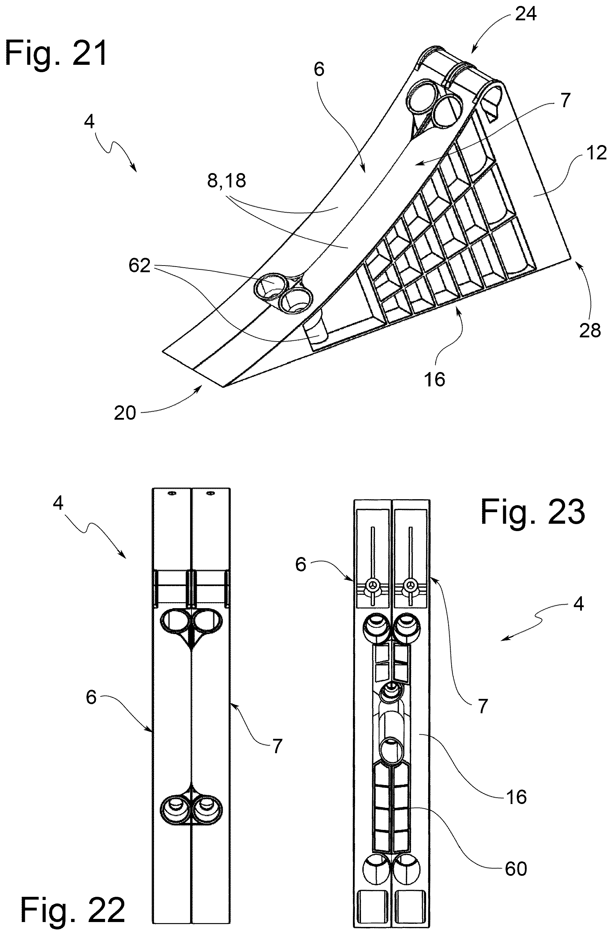

According to a possible embodiment (figures 16-23), said lower rods 56 are connected to each other by means of a second central hinge 70 and are hinged to said side wheel chocks/wedges 6,7 from the side of the respective lower front vertices 20 at lower pins 62.

Preferably, said second central hinge 70 is raised with respect to the support base 16 of the side wheel chocks/wedges 6,7 so as not to discharge any loads onto the ground.

In other words, the second central hinge 70 only acts as a rotary joint for connecting the side wheel chocks/wedges 6,7 and not as a strut for transmitting the load coming from the wheel.

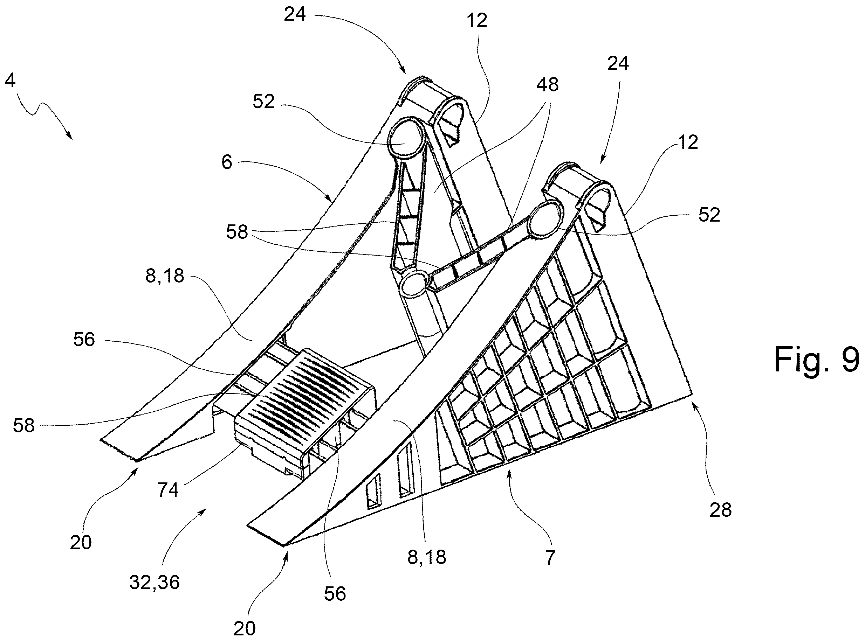

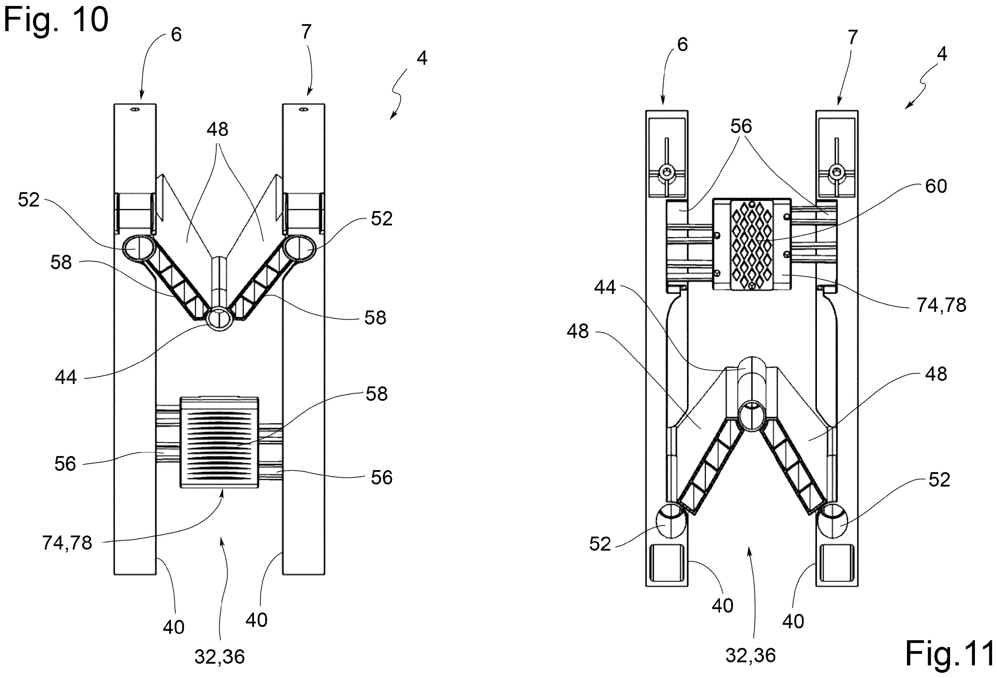

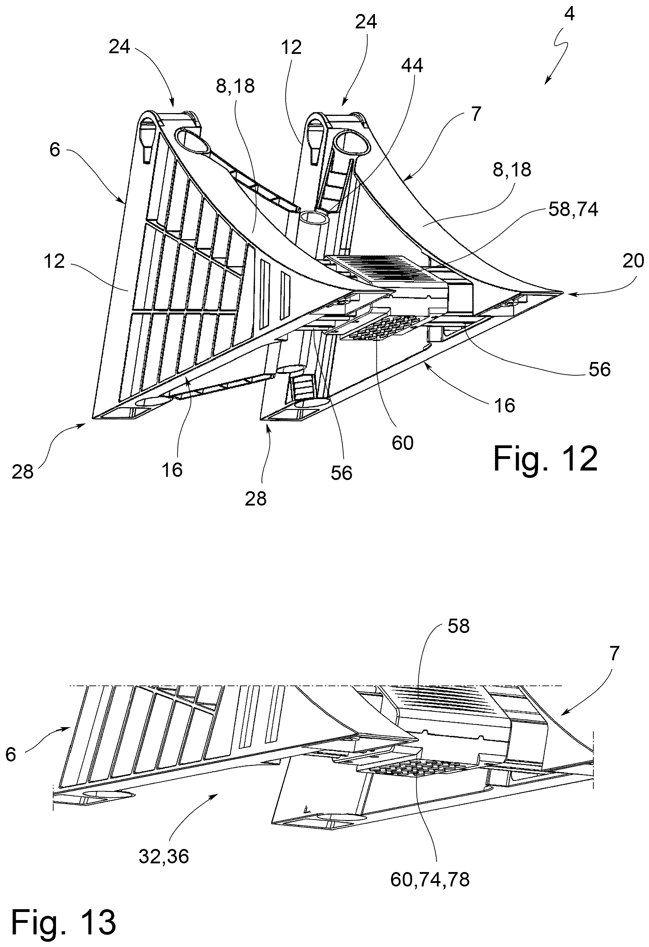

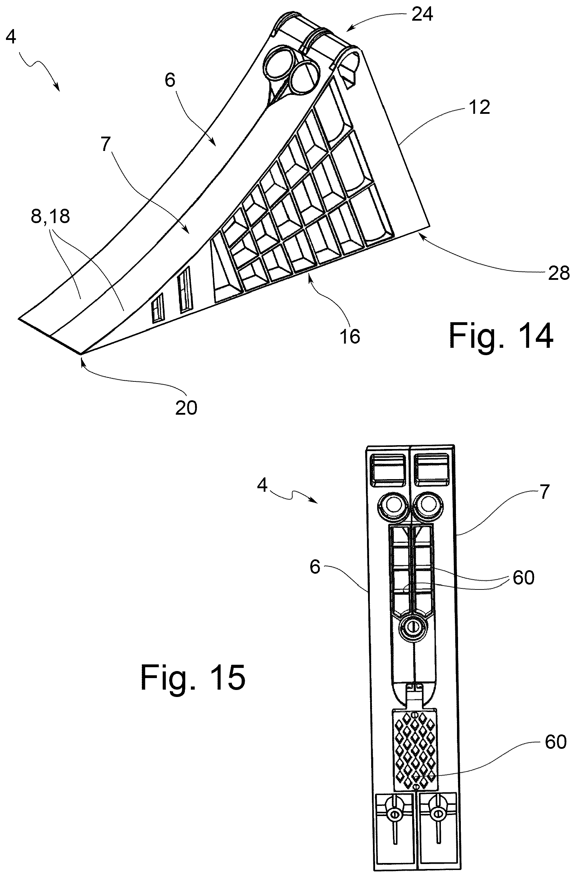

According to a possible embodiment (figures 9-15), said lower rods 56 are constrained to said side wheel chocks/wedges 6,7 from the side of the respective lower front vertices 20 and are constrained to each other by means of a telescopic connection 74, along said transverse direction T-T.

The telescopic structure 74 can comprise a plurality of lower rods 56 at least partially housed and covered by a central plate 78.

Preferably, said upper connecting rods 48 and/or lower rods 56 have a hollow box-like structure. According to a further embodiment, said upper connecting rods 48 and/or lower rods 56 have a solid structure.

According to a possible embodiment, the connecting structure 32 is configured so that, in the closing configuration of the side wheel chocks/wedges 6,7, it is contained in the intermediate space 36, within a transverse dimension of the side wheel chocks/wedges 6,7 themselves.

According to a possible embodiment, the side wheel chocks/wedges 6,7, from the side of the support walls 12, comprise at least one recess 80 to facilitate the grip and opening the wheel chock 4. However, said recess 80 is optional.

Preferably, the two upper connecting rods 48 and/or the two lower rods 56 are counter-shaped to the front faces 18 of the stop ramps 8 of the side wheel chocks/wedges 6,7 with respect to a projection plane perpendicular to said transverse direction T-T.

The materials of the wheel chocks 4 described above can be various; preferably, but not exclusively, the stop ramp 8 and/or the support wall 24 are made of a plastic material, possibly reinforced with metal inserts.

The operation, thus the opening/closing method, of a wheel chock according to the present invention will now be described.

In particular, when not in use, the wheel chock can be stored in a closed configuration, i.e., with the side wheel chocks/wedges substantially close to each other or in mutual contact.

Thus, in a closed configuration, the wheel chock 4 takes a flat, particularly compact configuration with a small transverse dimension, and for example can be stored inside the vehicle cab.

In principle, in the closed or resting configuration, the wheel chock 4 has a dimension equal to about half of its dimension in the configuration of use. It is also possible to provide embodiments in which, in the closed or resting configuration, the wheel chock 4 has a dimension either greater or smaller than half of its dimension in the configuration of use.

In such a configuration, the connecting structure 32 is practically concealed in the intermediate space 36 between the side wheel chocks/wedges 6,7.

If required, the wheel chock 4 can be "opened" by arranging the side wheel chocks/wedges 6,7 in the working configuration, i.e., of maximum transverse distance from each other.

The wheel chock 4 is now operational. If the wheel of the vehicle approaches the stop ramp 8, the wheel weight itself locks the stop ramp 8 in place.

As can be appreciated from the description above, the wheel chocks according to the invention allow overcoming the drawbacks of the prior art.

In particular, the present invention allows providing a wheel chock which is mechanically strong and durable over time.

The chock has no greater cost or weight than the equivalent "fixed"-type, i.e., non-folding, solutions of the prior art, while being lighter and less expensive than known folding solutions.

The wheel chock according to the present invention in a folded configuration has a significantly reduced volume and can thus also be easily stored inside the cab or passenger compartment of the vehicle.

The wheel chock of the present invention has a particularly low weight.

The geometric structure with ribs ensures that the wheel chock meets the needs and requirements for robustness and mechanical strength.

The wheel chock of the present invention, in a closed or folded configuration, has a particularly compact structure, which can be easily stored inside the cab of the vehicle. This thus avoids the wheel chock from being subjected to whether agents when not in use (increasing the actual life thereof) and from being removed by third parties.

The wheel chock of the present invention is particularly safe because the opening/closing movement of the side wheel chocks/wedges is transverse to the load applied by the vehicle wheel: therefore, the application of the load by the wheel does not tend to open or close the wheel chock itself.

In order to meet contingent, specific needs, those skilled in the art may make several changes and variations to the wheel chocks described above.

The scope of protection of the present invention is defined by the following claims.

### List of reference signs:

4: wheel chock
6,7: side wheel chocks/wedges
8: stop ramp
12: support wall
16: support base
18: front face
20: lower front vertex
24: upper rear vertex
28: lower rear vertex
32: connecting structure
36: intermediate space
40: inner side walls
44: first central hinge
48: upper connecting rods
52: upper pins
56: lower rods
58: upper edge
60: support wall
62: lower pins
66: slots
70: second central hinge
74: telescopic connection
78: central plate
80: recess
V-V: vertical axis
T-T: transverse direction
L-L: longitudinal direction

## Claims

1. Closable wheel chock (4) for vehicles comprising:
- a pair of side wheel chocks/side wedges (6,7), each equipped with a stop ramp (8), a support wall (12) and a support base (16) to a ground,
- wherein each stop ramp (8) has a front face (18) shaped to interface with a vehicle wheel, extending from a lower front vertex (20) to an upper rear vertex (24),
- wherein each support wall (12) extends from said upper rear vertex (24) to a lower rear vertex (28), opposite to the stop ramp (8) with respect to a vertical plane (V-V), perpendicular to the support base (16) and passing through said upper rear vertex (24),
- wherein each support base (16) extends from said lower front vertex (20) to said lower rear vertex (28),
- a connecting structure (32) of said side wheel chocks/wedges (6,7), movable from a closing or resting configuration in which said side wheel chocks/wedges (6,7) are close and/or at least partially in contact with each other along a transverse direction (T-T) to an opening or working configuration in which said side wheel chocks/wedges (6,7) are spaced apart from each other along said transverse direction (T-T),
- the side wheel chocks/wedges (6,7) being translatable parallel to said transverse direction (T-T) to switch from the opening configuration to the closing configuration and vice versa,
- the connecting structure (32) being arranged in an intermediate space (36), delimited by inner side walls (40) of the side wheel chocks/wedges (6,7), mutually facing each other, said intermediate space (36) being variable as a function of the distance between the inner side walls (40) along the transverse direction (T-T),
- wherein said connecting structure (32) comprises at least a first central hinge (44) connecting at least two upper connecting rods (48) hinged to the side wheel chocks/wedges (6,7) from the side of the respective upper rear vertices (24) at upper pins (52), and at least two mutually movable lower rods (56) connecting the side wheel chocks/wedges (6,7) from the side of the respective lower front vertices (20).

2. Closable wheel chock (4) according to claim 1, wherein the upper connecting rods (48) and/or the lower rods (56) are load-bearing and configured so as to receive a load from the associable vehicle wheel, at an upper edge (58) thereof, and to transmit it to the ground by means of a support wall (60) parallel to and aligned with the support base (16) of the side wheel chocks/wedges (6,7).

3. Closable wheel chock (4) according to claim 1 or 2, wherein said first central hinge (44) is raised with respect to the support base (16) of the side wedges (6,7) so as not to discharge any loads on the ground.

4. Closable wheel chock (4) according to claim 1, 2 or 3, wherein said upper pins (52) are aligned with respect to the support base (16) of the side wheel chocks/wedges (6,7) so as to discharge the load on the ground.

5. Closable wheel chock (4) according to any one of claims 1 to 4, wherein said lower rods (56) are hinged to said first central hinge (44) and to said side wheel chocks/wedges (6,7) from the side of the respective lower front vertices (20), at lower pins (62).

6. Closable wheel chock (4) according to claim 5, wherein said lower pins (62) are housed within slots (66).

7. Closable wheel chock (4) according to any one of claims 1 to 4, wherein said lower rods (56) are connected to each other by means of a second central hinge (70) and are hinged to said side wheel chocks/wedges (6,7) from the side of the respective lower front vertices (20) at lower pins (62).

8. Closable wheel chock (4) according to claim 7, wherein said second central hinge (70) is aligned with respect to the support base (16) of the side wheel chocks/wedges (6,7) so as to discharge any load on the ground.

9. Closable wheel chock (4) according to any one of claims 1 to 4, wherein said lower rods (56) are constrained to said side wheel chocks/wedges (6,7) from the side of the respective lower front vertices (20) and are constrained to each other by means of a telescopic connection (74), along said transverse direction (T-T).

10. Closable wheel chock (4) according to any one of claims 1 to 9, wherein said upper connecting rods (48) and/or lower rods (56) have a hollow box-like structure.

11. Closable wheel chock (4) according to any one of claims 1 to 10, wherein the connecting structure (32) is configured so that, in the closing configuration of the side wheel chocks/wedges (6,7), it is contained in the intermediate space (36), within a transverse dimension of the side wedges (6,7) themselves.

12. Closable wheel chock (4) according to any one of claims 1 to 11, wherein the side wheel chocks/wedges (6,7), from the side of the support walls (12), comprise at least one recess (80) for facilitating gripping and opening the wheel chock (4).

13. Closable wheel chock (4) according to any one of claims 1 to 12, wherein the front faces (18) of the stop ramps (8) are flat or concave and wherein the two upper connecting rods (48) and/or the two lower rods (56) are counter-shaped to the front faces (18) with respect to a projection plane perpendicular to said transverse direction (T-T).

## Patentansprüche

1. Faltbarer Unterlegkeil (4) für Fahrzeuge, umfassend:
- ein Paar seitlicher Unterlegkeile/Seitenkeile (6, 7), die jeweils mit einer Anschlagrampe (8), einer Stützwand (12) und einer Auflagebasis (16) auf einem Boden ausgestattet sind,
- wobei jede Anschlagrampe (8) eine Vorderseite (18) aufweist, die so geformt ist, dass sie an ein Fahrzeugrad anschließt, und die sich von einem unteren vorderen Scheitelpunkt (20) zu einem oberen hinteren Scheitelpunkt (24) erstreckt,
- wobei sich jede Stützwand (12) von dem oberen hinteren Scheitelpunkt (24) zu einem unteren hinteren Scheitelpunkt (28) erstreckt, der der Anschlagrampe (8) in Bezug auf eine vertikale Ebene (V-V) gegenüberliegt, die senkrecht zur Auflagebasis (16) verläuft und durch den oberen hinteren Scheitelpunkt (24) verläuft,
- wobei sich jede Auflagebasis (16) von dem unteren vorderen Scheitelpunkt (20) zu dem unteren hinteren Scheitelpunkt (28) erstreckt,
- eine Verbindungsstruktur (32) der seitlichen Unterlegkeile/Keile (6, 7), die von einer Falt- oder Ruhekonfiguration, in der die seitlichen Unterlegkeile/Keile (6, 7) entlang einer Querrichtung (T-T) nahe beieinander liegen und/oder zumindest teilweise miteinander in Kontakt stehen, in eine Öffnungs- oder Arbeitskonfiguration bewegbar ist, in der die seitlichen Unterlegkeile/Keile (6, 7) entlang der Querrichtung (T-T) voneinander beabstandet sind,
- wobei die seitlichen Unterlegkeile/Keile (6, 7) parallel zur Querrichtung (T-T) verschiebbar sind, um von der Öffnungskonfiguration in die Faltkonfiguration und umgekehrt zu wechseln,
- wobei die Verbindungsstruktur (32) in einem Zwischenraum (36) angeordnet ist, der durch einander zugewandte innere Seitenwände (40) der seitlichen Unterlegkeile/Keile (6, 7) begrenzt wird, wobei der Zwischenraum (36) in Abhängigkeit vom Abstand zwischen den inneren Seitenwänden (40) entlang der Querrichtung (T-T) variabel ist,
- wobei die Verbindungsstruktur (32) mindestens ein erstes zentrales Gelenk (44) umfasst, das mindestens zwei obere Verbindungsstangen (48), die an den seitlichen Unterlegkeilen/Keilen (6, 7) auf der Seite der jeweiligen oberen hinteren Scheitelpunkte (24) an oberen Bolzen (52) angelenkt sind, und mindestens zwei gegeneinander bewegliche untere Stangen (56) verbindet, welche die seitlichen Unterlegkeile/Keile (6, 7) von der Seite der jeweiligen unteren vorderen Scheitelpunkte (20) her verbinden.

2. Faltbarer Unterlegkeil (4) nach Anspruch 1, wobei die oberen Verbindungsstangen (48) und/oder die unteren Stangen (56) tragend und so konfiguriert sind, dass sie an einer Oberkante (58) davon eine Last von dem zuordenbaren Fahrzeugrad aufnehmen und diese mittels einer Stützwand (60), die parallel zu der Auflagebasis (16) der seitlichen Unterlegkeile/Keile (6, 7) verläuft und mit dieser ausgerichtet ist, auf den Boden übertragen.

3. Faltbarer Unterlegkeil (4) nach Anspruch 1 oder 2, wobei das erste zentrale Gelenk (44) in Bezug auf die Auflagebasis (16) der Seitenkeile (6, 7) erhöht ist, um keine Lasten auf den Boden abzugeben.

4. Faltbarer Unterlegkeil (4) nach Anspruch 1, 2 oder 3, wobei die oberen Bolzen (52) in Bezug auf die Auflagebasis (16) der seitlichen Unterlegkeile/Keile (6, 7) so ausgerichtet sind, dass sie die Last auf den Boden abgeben.

5. Faltbarer Unterlegkeil (4) nach einem der Ansprüche 1 bis 4, wobei die unteren Stangen (56) an dem ersten zentralen Gelenk (44) und an den seitlichen Unterlegkeilen/Keilen (6, 7) auf der Seite der jeweiligen unteren vorderen Scheitelpunkte (20) an unteren Bolzen (62) angelenkt sind.

6. Faltbarer Unterlegkeil (4) nach Anspruch 5, wobei die unteren Bolzen (62) in Schlitzen (66) untergebracht sind.

7. Faltbarer Unterlegkeil (4) nach einem der Ansprüche 1 bis 4, wobei die unteren Stangen (56) mittels eines zweiten zentralen Gelenks (70) miteinander verbunden sind und an den seitlichen Unterlegkeilen/Keilen (6, 7) auf der Seite der jeweiligen unteren vorderen Scheitelpunkte (20) an unteren Bolzen (62) angelenkt sind.

8. Faltbarer Unterlegkeil (4) nach Anspruch 7, wobei das zweite zentrale Gelenk (70) in Bezug auf die Auflagebasis (16) der seitlichen Unterlegkeile/Keile (6, 7) so ausgerichtet ist, dass es jegliche Last auf den Boden abgibt.

9. Faltbarer Unterlegkeil (4) nach einem der Ansprüche 1 bis 4, wobei die unteren Stangen (56) an den seitlichen Unterlegkeilen/Keilen (6, 7) auf der Seite der jeweiligen unteren vorderen Scheitelpunkte (20) gehalten sind und mittels einer Teleskopverbindung (74) entlang der Querrichtung (T-T) aneinander gehalten sind.

10. Faltbarer Unterlegkeil (4) nach einem der Ansprüche 1 bis 9, wobei die oberen Verbindungsstangen (48) und/oder unteren Stangen (56) eine hohle kastenartige Struktur aufweisen.

11. Faltbarer Unterlegkeil (4) nach einem der Ansprüche 1 bis 10, wobei die Verbindungsstruktur (32) so konfiguriert ist, dass sie in der Faltkonfiguration der seitlichen Unterlegkeile/Keile (6, 7) im Zwischenraum (36) innerhalb einer Querabmessung der Seitenkeile (6, 7) selbst enthalten ist.

12. Faltbarer Unterlegkeil (4) nach einem der Ansprüche 1 bis 11, wobei die seitlichen Unterlegkeile/Keile (6, 7) auf der Seite der Stützwände (12) mindestens eine Aussparung (80) zur Erleichterung des Greifens und Öffnens des Unterlegkeils (4) umfassen.

13. Faltbarer Unterlegkeil (4) nach einem der Ansprüche 1 bis 12, wobei die Vorderseiten (18) der Anschlagrampen (8) flach oder konkav sind und wobei die zwei oberen Verbindungsstangen (48) und/oder die zwei unteren Stangen (56) in Bezug auf eine Projektionsebene senkrecht zur Querrichtung (T-T) komplementär zu den Vorderseiten (18) geformt sind.

## Revendications

1. Cale de roue refermable (4) pour véhicules comprenant :
- une paire de cales de roues latérales/coins latéraux (6,7), chacun équipé d'une rampe d'arrêt (8), d'une paroi de support (12) et d'une base de support (16) au sol,
- dans laquelle chaque rampe d'arrêt (8) a une face avant (18) formée pour s'interfacer avec une roue de véhicule, s'étendant d'un sommet avant inférieur (20) à un sommet arrière supérieur (24),
- dans laquelle chaque paroi de support (12) s'étend dudit sommet arrière supérieur (24) à un sommet arrière inférieur (28), opposé à la rampe d'arrêt (8) par rapport à un plan vertical (V-V), perpendiculaire à la base de support (16) et passant par ledit sommet arrière supérieur (24),
- dans laquelle chaque base de support (16) s'étend dudit sommet avant inférieur (20) audit sommet arrière inférieur (28),
- une structure de liaison (32) desdites cales de roues latérales/coins latéraux (6,7), mobile d'une configuration de fermeture ou de repos dans laquelle lesdites cales/coins de roues latérales (6,7) sont proches et/ou au moins partiellement en contact les unes avec les autres le long d'une direction transversale (T-T) à une configuration d'ouverture ou de travail dans laquelle lesdites cales/coins de roues latérales (6,7) sont espacées les unes des autres le long de ladite direction transversale (T-T),
- les cales de roues latérales/coins latéraux (6,7) pouvant être translatés parallèlement à ladite direction transversale (T-T) pour passer de la configuration d'ouverture à la configuration de fermeture et vice versa,
- la structure de liaison (32) étant disposée dans un espace intermédiaire (36), délimité par des parois latérales internes (40) des cales de roues latérales/coins latéraux (6,7), se faisant mutuellement face, ledit espace intermédiaire (36) étant variable en fonction de la distance entre les parois latérales internes (40) selon la direction transversale (T-T),
- dans laquelle ladite structure de liaison (32) comprend au moins une première charnière centrale (44) reliant au moins deux tiges de liaison supérieures (48) articulées aux cales de roues latérales/coins latéraux (6,7) depuis le côté des sommets arrière supérieurs respectifs (24) au niveau des goupilles supérieures (52), et au moins deux tiges inférieures mobiles mutuellement (56) reliant les cales de roues latérales/coins latéraux (6,7) depuis le côté des sommets avant inférieurs respectifs (20).

2. Cale de roue refermable (4) selon la revendication 1, dans laquelle les tiges de liaison supérieures (48) et/ou les tiges inférieures (56) sont porteuses et configurées pour recevoir une charge de la roue de véhicule associable, au niveau d'un bord supérieur (58) de celle-ci, et pour la transmettre au sol au moyen d'une paroi de support (60) parallèles à et alignés avec la base de support (16) des cales de roues latérales/coins latéraux (6,7).

3. Cale de roue refermable (4) selon la revendication 1 ou 2, dans laquelle ladite première charnière centrale (44) est relevée par rapport à la base de support (16) des coins latéraux (6,7) afin de ne pas décharger de charges sur le sol.

4. Cale de roue refermable (4) selon la revendication 1, 2 ou 3, dans laquelle lesdites goupilles supérieures (52) sont alignées par rapport à la base de support (16) des cales de roues latérales/coins latéraux (6,7) de manière à décharger la charge sur le sol.

5. Cale de roue refermable (4) selon l'une quelconque des revendications 1 à 4, dans laquelle lesdites tiges inférieures (56) sont articulées à ladite première charnière centrale (44) et auxdites cales de roues latérales/coins latéraux (6,7) à partir du côté des sommets avant inférieurs respectifs (20), au niveau des goupilles inférieures (62).

6. Cale de roue refermable (4) selon la revendication 5, dans laquelle lesdites goupilles inférieures (62) sont logées dans des fentes (66).

7. Cale de roue refermable (4) selon l'une quelconque des revendications 1 à 4, dans laquelle lesdites tiges inférieures (56) sont reliées les unes aux autres au moyen d'une deuxième charnière centrale (70) et sont articulées auxdites cales de roues latérales/coins latéraux (6,7) à partir du côté des sommets avant inférieurs respectifs (20) au niveau des goupilles inférieures (62).

8. Cale de roue refermable (4) selon la revendication 7, dans laquelle ladite deuxième charnière centrale (70) est alignée par rapport à la base de support (16) des cales de roues latérales/coins latéraux (6,7) de manière à décharger toute charge sur le sol.

9. Cale de roue refermable (4) selon l'une quelconque des revendications 1 à 4, dans laquelle lesdites tiges inférieures (56) sont contraintes auxdites cales de roues latérales/coins latéraux (6,7) à partir du côté des sommets avant inférieurs respectifs (20) et sont contraintes les unes aux autres au moyen d'une liaison télescopique (74), le long de ladite direction transversale (T-T).

10. Cale de roue refermable (4) selon l'une quelconque des revendications 1 à 9, dans laquelle lesdites tiges de liaison supérieures (48) et/ou tiges inférieures (56) ont une structure en forme de boîte creuse.

11. Cale de roue refermable (4) selon l'une quelconque des revendications 1 à 10, dans laquelle la structure de liaison (32) est configurée de telle sorte que, dans la configuration de fermeture des cales de roues latérales/coins latéraux (6,7), elle est contenue dans l'espace intermédiaire (36), dans une dimension transversale des coins latéraux (6,7) eux-mêmes.

12. Cale de roue refermable (4) selon l'une quelconque des revendications 1 à 11, dans laquelle les cales de roues latérales/coins latéraux (6,7), à partir du côté des parois de support (12), comprennent au moins un évidement (80) pour faciliter la préhension et l'ouverture de la cale de roue (4).

13. Cale de roue refermable (4) selon l'une quelconque des revendications 1 à 12, dans laquelle les faces frontales (18) des rampes d'arrêt (8) sont plates ou concaves et dans laquelle les deux tiges de liaison supérieures (48) et/ou les deux tiges inférieures (56) sont de forme opposée aux faces frontales (18) par rapport à un plan de projection perpendiculaire à ladite direction transversale (T-T).
